# EUROPÄISCHE PATENTSCHRIFT

(11) **EP 3 589 531 B1**
(45) Veröffentlichungstag und Bekanntmachung des Hinweises auf die Patenterteilung: **02.08.2023**
(21) Anmeldenummer: 18704410.2
(22) Anmeldetag: 16.01.2018
(51) Int. Cl.: B62D 6/00

(54) **BETRIEBSVERFAHREN FÜR EIN STEER-BY-WIRE-LENKSYSTEM, STEUEREINHEIT FÜR EIN STEER-BY-WIRE-LENKSYSTEM, STEER-BY-WIRE-LENKSYSTEM UND FAHRZEUG**
OPERATING METHOD FOR A STEER-BY-WIRE STEERING SYSTEM, CONTROL UNIT FOR A STEER-BY-WIRE STEERING SYSTEM, STEER-BY-WIRE STEERING SYSTEM, AND VEHICLE
PROCÉDÉ DE FONCTIONNEMENT POUR UN SYSTÈME DE DIRECTION À COMMANDE PAR CÂBLE ÉLECTRIQUE, UNITÉ DE COMMANDE POUR UN SYSTÈME DE DIRECTION À COMMANDE PAR CÂBLE ÉLECTRIQUE, SYSTÈME DE DIRECTION À COMMANDE PAR CÂBLE ÉLECTRIQUE ET VÉHICULE

(30) Priorität: 02.03.2017 DE 102017203456
(43) Veröffentlichungstag der Anmeldung: 08.01.2020
(73) Patentinhaber: VOLKSWAGEN AKTIENGESELLSCHAFT, 38440 Wolfsburg (DE)
(72) Erfinder: DOBBERPHUL, Timo, 38102 Braunschweig (DE); KREIS, Christopher, 38126 Braunschweig (DE); RÜGER, Tobias, 38106 Braunschweig (DE)
(86) Internationale Anmeldenummer: PCT/EP2018/051021
(87) Internationale Veröffentlichungsnummer: WO 2018/157989

(56) Entgegenhaltungen:
- EP-A2- 0 974 507
- DE-A1- 19 806 458
- DE-A1-102014 117 718
- DE-A1-102015 204 332
- US-A1- 2014 200 770

## Beschreibung

Die vorliegende Erfindung betrifft ein Betriebsverfahren für ein Steer-by-Wire-Lenksystem, eine Steuereinheit für ein Steer-by-Wire-Lenksystem, ein Steer-by-Wire-Lenksystem als solches und ein Fahrzeug, welches mit einem Steer-by-Wire-Lenksystem ausgebildet ist.

In der Fahrzeugtechnik kommen vermehrt Lenkunterstützungs- und/oder Lenkassistenzsysteme zum Einsatz, bei welchen zwischen einem Lenkrad und einem Lenkgetriebe keine durchgängige und direkte mechanische Verbindung besteht, sondern bei welchen eine Kopplung dieser Komponenten über eine reine Signalstrecke erfolgt, sei diese als ein Bus, also leitungsgebunden, oder drahtlos realisiert. Derartige Systeme werden allgemein als Steer-by-Wire-Lenksysteme bezeichnet.

Aus der Druckschrift EP 0 974 507 A2 ist ein Lenksystem vom Steer-by-wire-Typ für ein Fahrzeug bekannt, bei welchem ein der Ausrichtung lenkbarer Räder 20 entsprechender Lenkwinkel erfasst und ein entsprechendes Signal an eine Steuereinheit 14 geliefert wird. Die Steuereinheit ihrerseits ermittelt einen zugehörigen Solllenkwinkel einer Lenkbedieneinrichtung 10 und stellt einen entsprechenden Istlenkwinkel an der Lenkbedieneinrichtung 10 ein.

Aus den weiteren Druckschriften DE 10 2015 204 332 A1, US 2014/0200770 A1, DE 10 2014 117 718 A1 und DE 198 06 458 A1 sind ebenfalls Lenksysteme vom Steer-by-wire-Typ und von ähnlichem Aufbau und ähnlicher Funktion bekannt, wie sie im Zusammenhang mit der Druckschrift EP 0 974 507 A2 beschrieben wurden.

Die DE 102 16 247 A1 betrifft die Regelung von Systemen mit kinästhetischer Kopplung und insbesondere die Umsetzung von Reglerstrukturen für Master/Slave-Anordnungen mit Kraftrückkopplung und die Anwendung dieses Prinzips im Bereich von Steer-by-Wire(SbW)-Lenksystemen in der Kraftfahrzeugindustrie. In diesem Zusammenhang ist eine Vorrichtung zur Übertragung des Lenkgefühls konventioneller mechanischer, elektromechanischer bzw. hydraulischer Lenk- und Lenkunterstützungssysteme für Land-, Wasser-, Luft- und Raumfahrzeuge aller Art auf ein mechatronisches Lenksystem mit kinästhetischer Kopplung zwischen mindestens einem Bediengerät (804a) zur Steuerung des Lenkwinkels durch den Benutzer, bestehend aus Sensoren zur Aufnahme der auf das Bediengerät wirkenden Kräfte und Drehmomente sowie Aktuatoren zur Veränderung dieser Parameter und mindestens einem ausführenden Gerät zur Lenkung des Fahrzeugs abhängig von der durch das Bediengerät vorgegebenen Steuerung, bestehend aus Sensoren zur Erfassung der aktuellen Position und Orientierung des Fahrzeugs sowie zur Aufnahme der auf die Komponenten des ausführenden Geräts wirkenden Kräfte und Drehmomente sowie Aktuatoren zur Veränderung dieser Parameter vorgesehen. Ferner sind ein bidirektionales Regelungssystem zur Rückführung gemessener Positionen, Orientierungen, Kräfte und/oder Drehmomente vom Bediengerät zum ausführenden Gerät und umgekehrt und ein Datenbus zur entsprechenden Signalübertragung ausgebildet.

Der Erfindung liegt die Aufgabe zu Grunde, ein Betriebsverfahren für ein Steer-by-Wire-Lenksystem, eine Steuereinheit für ein Steer-by-Wire-Lenksystem, ein Steer-by-Wire-Lenksystem als solches und Fahrzeug anzugeben, bei welchen mit besonders einfachen Mitteln trotz des Fehlens einer durchgängigen und direkten mechanischen Verbindung der Lenkkomponenten die direkte Ankopplung der Lenkkomponenten im Sinne einer haptischen Rückmeldung an den Benutzer einerseits sowie im Sinne einer direkten Umsetzung eines Fahrerwunsches andererseits zumindest gleichwertig nachempfunden wird.

Die der Erfindung zu Grunde liegende Aufgabe wird bei einem Betriebsverfahren für ein Steer-by-Wire-Lenksystem erfindungsgemäß mit den Merkmalen des unabhängigen Patentanspruchs 1, bei einer Steuereinheit für ein Steer-by-Wire-Lenksystem erfindungsgemäß mit den Merkmalen des unabhängigen Patentanspruchs 5, bei einem Steer-by-Wire-Lenksystem erfindungsgemäß mit den Merkmalen des Patentanspruchs 6 und bei einem Fahrzeug erfindungsgemäß mit den Merkmalen des Patentanspruchs 7 gelöst. Vorteilhafte Weiterbildungen sind Gegenstand der jeweiligen abhängigen Ansprüche.

Gemäß einem ersten Aspekt der vorliegenden Erfindung wird ein Betriebsverfahren für ein Steer-by-Wire-Lenksystem mit einem Lenkgetriebemodul, einem Lenkradmodul und einem diese verbindenden Kommunikationskanal geschaffen, wobei bei dem Betriebsverfahren (i) eine Istposition im Lenkgetriebemodul erfasst und (ii) eine Sollposition im Lenkradmodul in Relation zur Istposition im Lenkgetriebemodul unter Verwendung einer Zuordnungsvorschrift ausgeregelt wird. Dabei wird durch Einstellen der Zuordnungsvorschrift eine erweiterte haptische Rückmeldung an den Benutzer realisiert. Ferner werden auf eine Positionsabweichung im Lenkradmodul und/oder auf einen Messwert eines Drehmomentensensors ein Lenkmoment und/oder eine Lenkkraft ermittelt, welche auf ein Lenkrad des Lenkradmoduls wirken. Mittels der invertierten Zuordnungsvorschrift aus dem ermittelten Lenkmoment und/oder der ermittelten Lenkkraft wird ein zweites Steuersignal für das Lenkgetriebemodul bestimmt und über einen Bus an das Lenkgetriebemodul übertragen wird, nämlich zu dessen Positionierung, zur Ansteuerung eines im Lenkgetriebemodul vorgesehenen Antriebs und/oder gemäß dem ermittelten Lenkmoment bzw. gemäß der ermittelten Lenkkraft.

Auf diese Weise wird erreicht, dass in Abhängigkeit von der Zuordnungsvorschrift eine haptische Rückmeldung für den Benutzer an das Lenkradmodul ausgebildet werden kann, welche das bekannte unmittelbare und direkt mechanische Verhalten einer Lenkeinheit nachempfindet. Durch Einstellen der Zuordnungsvorschrift lassen sich darüber hinaus erweiterte Möglichkeiten bei der haptischen Rückmeldung an den Benutzer realisieren.

Vorzugsweise wird im Lenkradmodul der Fahrerwunsch erfasst und/oder umgekehrt in Richtung des Lenkgetriebemoduls zu dessen Ansteuerung eingespeist.

Vorangehend und nachfolgend wird im Sinne der vorliegenden Erfindung ein Bus ganz allgemein als Kommunikationskanal zur Signalübertragung zwischen den angesprochenen Komponenten aufgefasst, wobei im engeren Sinn auch immer ein leitungsgebundener Kommunikationsbus gemeint sein kann.

Gemäß einer vorteilhaften Weiterbildung des erfindungsgemäßen Betriebsverfahrens wird die Istposition im Lenkgetriebemodul und/oder ein dafür repräsentatives Signal als erstes Steuersignal über den Bus an das Lenkradmodul übertragen. Das übertragene Signal kann dabei zur Positionierung im Lenkradmodul, zur Modellierung einer Haptik und/oder zur Ansteuerung eines im Lenkradmodul vorgesehenen Antriebs eingesetzt werden.

Dabei kann das erste Steuersignal direkt oder in weiterverarbeiteter und/oder abgeleiteter Form zum Einsatz kommen.

Beim erfindungsgemäßen Betriebsverfahrens wird eine Positionsabweichung im Lenkradmodul, die auch als Orientierungs- oder Winkelabweichung aufgefasst werden kann, erfasst und daraufhin ein Lenkmoment und/oder eine Lenkkraft ermittelt, welche auf ein Lenkrad des Lenkradmoduls wirken. Zusätzlich oder alternativ kann dabei die Ermittlung des Lenkmoments und/oder der Lenkkraft auch auf Messwerten basieren, die mittels eines Drehmomentensensors erzeugt werden.

Dabei wird erfindungsgemäß mittels der invertierten Zuordnungsvorschrift aus dem ermittelten Lenkmoment und/oder der ermittelten Lenkkraft ein zweites Steuersignal für das Lenkgetriebemodul bestimmt und über den Bus an das Lenkgetriebemodul übertragen.

Vorzugsweise erfolgt die Erfassung und Übertragung eines Fahrerwunsches immer, damit das Lenkgetriebemodul angesteuert werden kann. Dabei kann zusätzlich die Erfassung über einen installierten Sensor erfolgen, zum Beispiel über einen Drehmomentsensor.

Das zweite Signal wird zur Positionierung und/oder Orientierung im Lenkgetriebemodul und/oder zur Ansteuerung eines im Lenkgetriebemodul vorgesehenen Antriebs verwendet werden, nämlich gemäß dem ermittelten Lenkmoment bzw. gemäß der ermittelten Lenkkraft.

Dabei kann das zweite Steuersignal direkt oder in weiterverarbeiteter und/oder abgeleiteter Form zum Einsatz kommen.

Das Lenkmoment und/oder die Lenkkraft sind dabei vorteilhafterweise repräsentativ für ein Fahrerhandmoment bzw. für eine Fahrerhandkraft, welche im Betrieb von einem Bediener auf ein Lenkrad des Lenkradmoduls ausgeübt werden. Durch diese Maßnahmen wird der Lenkwunsch des Fahrers besonders zuverlässig erfasst und abgebildet.

Durch das erfindungsgemäße Betriebsverfahren lassen sich die zwischen Lenkgetriebemodul und Lenkradmodul übertragenen Signale besonders flexibel und vielfältig nutzen, um einerseits die haptische Rückmeldung an den Benutzer geeignet anzupassen und/oder andererseits eine vom Fahrer gewünschte Lenkaktion in geeigneter Weise anzupassen und als tatsächliche Lenkbewegung im Lenkgetriebemodul umzusetzen.

Dazu ist es von besonderem Vorteil, wenn gemäß einer anderen Ausgestaltungsform des erfindungsgemäßen Betriebsverfahrens die Zuordnungsvorschrift und/oder die invertierte Zuordnungsvorschrift repräsentativ sind für eine steuerbare Lenkübersetzung zwischen dem Lenkgetriebemodul und dem Lenkradmodul.

Gegebenenfalls können dabei die Zuordnungsvorschriften, nämlich für eine Übertragung vom Lenkradmodul an das Lenkgetriebemodul einerseits und für eine Übertragung vom Lenkgetriebemodul an das Lenkradmodul andererseits, unterschiedlich ausgestaltet sein, um eine besondere Lenk- und/oder Rückmeldesituation zu realisieren. In einem derartigen Fall liegt also keine strikte Inversion zwischen dem Hinweg und dem Rückweg bei der Signalübertragung vor; es werden in diesem Fall vielmehr zwei voneinander zu unterscheidende Zuordnungsvorschriften verwendet.

Allgemein realisieren die Zuordnungsvorschrift und/oder die invertierte Zuordnungsvorschrift - oder die voneinander zu unterscheidenden Zuordnungsvorschriften für den Hinweg und den Rückweg der Signalübertragung - zum Beispiel in repräsentativer Weise eine steuerbare Lenkübersetzung zwischen dem Lenkgetriebemodul und dem Lenkradmodul.

Gemäß einem weiteren Aspekt der vorliegenden Erfindung wird eine Steuereinheit für ein Steer-by-Wire-Lenksystem geschaffen. Das Steer-by-Wire-Lenksystem ist mit einem Lenkgetriebemodul, einem Lenkradmodul und einem diese verbindenden Kommunikationskanal, insbesondere mit einem Bus, ausgebildet. Erfindungsgemäß ist die Steuereinheit eingerichtet, das erfindungsgemäße Betriebsverfahren auszuführen.

Ferner schafft die vorliegende Erfindung ein Steer-by-Wire-Lenksystem als solches. Dieses ist mit einem Lenkgetriebemodul, einem Lenkradmodul und einem diese verbindenden Kommunikationskanal, insbesondere mit einem Bus, ausgebildet. Des Weiteren weist das Steer-by-Wire-Lenksystem eine erfindungsgemäße Steuereinheit auf.

Schließlich ist Gegenstand der vorliegenden Erfindung auch ein Fahrzeug, welches zur Fortbewegung mindestens ein lenkbares Rad und zur Lenkung des mindestens einen lenkbaren Rades eine Ausführungsform des erfindungsgemäßen Steer-by-Wire-Lenksystems aufweist.

### Kurzbeschreibung der Figuren

Weitere Einzelheiten, Merkmale und Vorteile der Erfindung ergeben sich aus der nachfolgenden Beschreibung und den Figuren.
- Figur 1: zeigt schematisch eine Ausführungsform des erfindungsgemäßen Fahrzeugs unter Verwendung einer Ausführungsform des erfindungsgemäßen Lenksystems.
- Figur 2: zeigt nach Art eines Blockdiagramms ein Gesamtregelkonzept, welches bei einer Ausführungsform des erfindungsgemäßen Betriebsverfahrens zu Grunde gelegt werden kann.
- Figur 3: zeigt nach Art eines Blockdiagramms ein Regelkonzept für ein Lenkradmodul, welches bei einer Ausführungsform des erfindungsgemäßen Betriebsverfahrens zu Grunde gelegt werden kann.

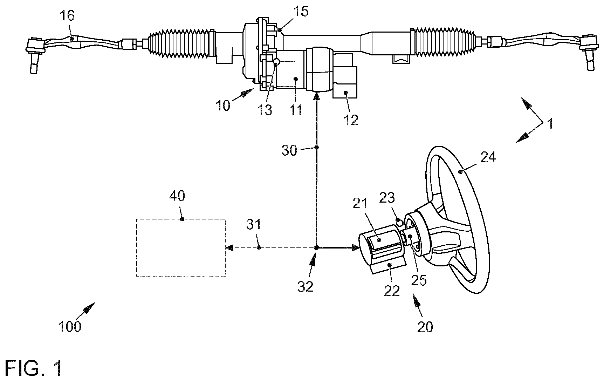

Nachfolgend werden unter Bezugnahme auf die Figuren 1 bis 3 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Figur 1 zeigt schematisch eine Ausführungsform des erfindungsgemäßen Fahrzeugs 100 unter Verwendung einer Ausführungsform des erfindungsgemäßen Steer-by-Wire-Lenksystems 1.

Das Steer-by-Wire-Lenksystem 1 gemäß Figur 1 besteht dem Kern nach aus einem Lenkgetriebemodul 10 und einem Lenkradmodul 20, welche über einen Kommunikationskanal in Form eines Busses 30 miteinander verbunden sind.

Optional kann an einem Knoten 32 des Busses 30 eine übergeordnete Steuereinheit 40 über einen Zweig 31 des Busses 30 angebunden sein. Dies ist jedoch nicht zwingend, zumal dann, wenn, wie bei der Ausführungsform gemäß Figur 1, sowohl das Lenkgetriebemodul 10 als auch das Lenkradmodul 20 eine eigene Steuereinheit 12 bzw. 22 aufweisen.

Des Weiteren sind am oder im Lenkgetriebemodul 10 eine Sensoreinheit 13 zur Erfassung einer Istposition und/oder Istorientierung im Lenkgetriebemodul 10 und insbesondere im Hinblick auf das Lenkgetriebe 15 und das Lenkelement 16 sowie ein Antrieb 11 für eine entsprechende Verstellung des Lenkgetriebes 15 und des Längselements 16 ausgebildet.

Das Lenkradmodul 20 weist eine Sensoreinheit 23 zur Erfassung der Stellung der Lenkradwelle 25 im Sinne einer Istorientierung oder Istposition und einen Antrieb 21 für eine haptische Rückkopplung über das Lenkrad 24 auf.

Über den Kommunikationsaustausch mittels des Busses 30 als Kommunikationskanal wird unter Einbeziehung der Steuereinheiten 12 und 22, gegebenenfalls unter Einbeziehung der übergeordneten Steuereinheit 40, das erfindungsgemäße Betriebsverfahren für ein Steer-by-Wire-Lenksystem 1 ausgeführt.

Das erfindungsgemäße Verfahren umfasst dabei insbesondere die Erfassung einer Istposition am oder im Lenkgetriebemodul 10, die Übertragung eines entsprechenden ersten Steuersignals über den Bus 30 an das Lenkradmodul 20 sowie die Ausregelung einer Sollposition im Lenkradmodul 20 in Relation zur Istposition im Lenkgetriebemodul 10 unter Verwendung einer bestimmten Zuordnungsvorschrift, welche insbesondere die Übertragung der haptischen Rückmeldung an den Benutzer vermittelt.

Ferner wird beim Eingriff eines Benutzers am Lenkrad 24 eine Positionsabweichung im Lenkradmodul 20 erzeugt. Diese Positionsabweichung, zum Beispiel im Sinne einer Neuorientierung der Lenkradwelle 25, kann erfindungsgemäß erfasst werden, um auf der Grundlage der erfassten Positionsabweichungen ein Lenkmoment und/oder eine Lenkkraft, welche auf das Lenkrad 24 des Lenkmoduls 20 wirken, zu bestimmen. Auf Grund einer entsprechenden Zuordnungsvorschrift, welche zum Beispiel zur oben beschriebenen Zuordnungsvorschrift für die Haptik invertiert sein kann, kann aus dem ermittelten Lenkmoment und/oder der ermittelten Lenkkraft ein zweites Steuersignal erzeugt und vom Lenkradmodul 20 über den Bus 30 an das Lenk Getriebemodul 10 übertragen werden, um dort eine Positionierung im Lenkgetriebemodul 10 und insbesondere in dessen Lenkgetriebe 15 und dem Lenkelement 16 zu bewirken.

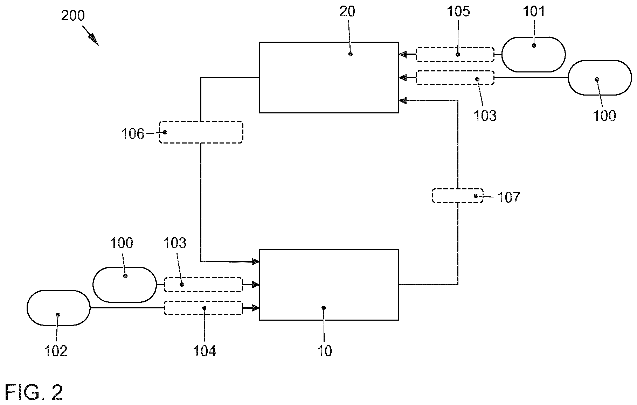

Figur 2 zeigt nach Art eines Blockdiagramms ein Gesamtregelkonzept im Sinne eines Gesamtregelverfahrens 200, welches einer Ausführungsform des erfindungsgemäßen Betriebsverfahrens zu Grunde gelegt werden kann.

Das Gesamtregelverfahren 200 gemäß Figur 2 ist dazu eingerichtet, das Zusammenwirken des Lenkgetriebemoduls 20 und des Lenkradmoduls 10 zu regeln.

Auf der Seite des Lenkgetriebemoduls 10 werden unter anderem als Eingangsparameter die Geschwindigkeit 103 des Fahrzeugs 100 und die Fahrbahnwechselwirkung 104 im Sinne einer Anregung oder Gegenkraft auf Grund der Wechselwirkung mit der Fahrbahn 102 erfasst und zugeführt und zum Beispiel in der Steuereinheit 12 des Lenkgetriebemoduls 10 ausgewertet und weiterverarbeitet, um eine Istposition 107 oder Istorientierung im Zusammenhang mit dem Lenkgetriebemodul 10 oder ein dafür repräsentatives Signal als erstes Steuersignal über den Bus 30 dem Lenkradmodul 20 zuzuführen.

Dies bedeutet mit anderen Worten, dass die in Rede stehenden Kräfte auf das Lenkgetriebemodul 10 wirken und dass dieses dadurch eventuell bewegt wird, wobei die Bewegung sich auf das Lenkradmodul 20 überträgt, wodurch der Fahrer quasi eine Rückmeldung von der Straße erhält.

Auf der Seite des Lenkradmoduls 20 wird auf der Grundlage des ersten Steuersignals und insbesondere der Istposition 107 im Lenkgetriebemodul 10 und gegebenenfalls unter Verwendung der Geschwindigkeit 103 des Fahrzeugs 100 und des abgeleiteten Handmoments 105 durch den Fahrer 101 und zum Beispiel durch die Steuereinheit 22 des Lenkradmoduls 20 im Lenkradmodul 20 ein Fahrerhandmoment 106 berechnet und ein dafür repräsentatives Signal als zweites Steuersignal erzeugt und über den Bus 30 zur Regelung der Istposition oder Istorientierung 107 des Lenkgetriebemoduls 10 an das Lenkgetriebemodul 10 übertragen.

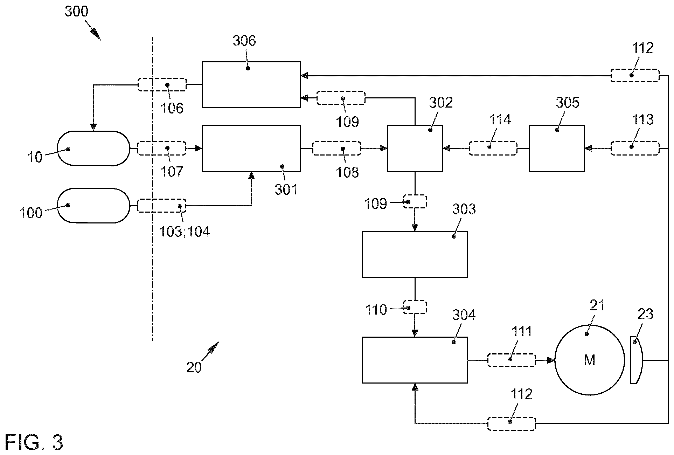

Figur 3 zeigt nach Art eines Blockdiagramms ein Regelkonzept im Sinne eines Regelverfahrens 300 für ein Lenkradmodul 20, welches bei einer Ausführungsform des erfindungsgemäßen Betriebsverfahrens zu Grunde gelegt werden kann.

Als Eingangsparameter für das Regelverfahren 300 für das Lenkradmodul 20 dienen einerseits die Istposition 107 in Bezug auf das Lenkradmodul 10 oder ein dafür repräsentatives Signal, zum Beispiel aufgefasst als ein erstes Steuersignal, und andererseits Parameter im Zusammenhang mit der Fahrzeuggeschwindigkeit 103 sowie eines gewählten Fahrprofils. Diese Parameter werden einer Einheit 301 zur Ermittlung eines Solllenkwinkels 108 zugeführt, wobei der Solllenkwinkel insbesondere im Zusammenhang mit einer Kennlinie, die in einem Speicher abgelegt sein kann, bestimmt wird, wobei die Kennlinie einen Zusammenhang herstellt zwischen der Istposition oder Istorientierung und dem Wert des Solllenkwinkels 108.

Der Solllenkwinkel 108 wird gleichzeitig mit einem Istlenkwinkel 114 einer Einheit 302 zur Bestimmung einer Regelabweichung zugeführt, welche eingerichtet ist, eine Winkelabweichung 109 zu ermitteln.

Die Winkelabweichung 109 wird einer Einheit 303 zur Regelung des Motormoments, also des Moments des Antriebs 21 des Lenkradmoduls 20, zugeführt, um aus der Positionsregelung das Motormoment 110 für den Antrieb 21 des Lenkradmoduls 20 festzulegen.

Unter Wirkung einer nachfolgenden Einheit 304 zur Kompensation der Massenträgheit kann aus dem Motormoment 110 aus der Positionsregelung ein Sollmoment abgeleitet und dem Antrieb 21 des Lenkradmoduls 20 als Steuergröße zugeführt werden, wobei in der Einheit 304 zur Kompensation der Massenträgheit noch die Rotorlageänderung 112 einfließen kann.

Die Rotorlageänderung 112 ergibt sich aus einem Messprozess mittels der Sensoreinheit 23 des Lenkradmoduls 20.

Die Rotorlageänderung 112 und insbesondere die Rotorlage 113 selbst, welche mittels der Sensoreinheit 23 ermittelt werden, werden der Einheit 105 zur Lenkwinkelberechnung zugeführt, um im Schluss des Regelkreises den Istlenkwinkel 114 zu berechnen.

Die Rotorlageänderung 112 wird zusammen mit der Winkelabweichung 109 aus der Einheit 302 zur Bestimmung der Regelabweichung einer Einheit 306 zur Berechnung des Handmoments 105 oder der Handkraft 105 zugeführt.

Das so berechnete Fahrerhandmoment 106 wird aus dem Lenkradmodul 20 und insbesondere aus der Einheit 306 direkt oder in Form eines repräsentativen zweiten Steuersignals über den Bus 30 dem Lenkgetriebemodul 10 zugeführt.

Alternativ oder zusätzlich können das Fahrerhandmoment 106 und eine entsprechende Kraft über vorgesehene Sensoren, zu Beispiel Drehmomentsensoren oder dergleichen, erfasst werden.

Damit ist der Regelkreis für das Lenkradmodul 20 geschlossen.

Diese und weitere Merkmale und Eigenschaften der vorliegenden Erfindung werden an Hand der folgenden Darlegungen weiter erläutert:
Steer-by-Wire-Lenksysteme 1 für Fahrzeuge 100 sind gemäß Figur 1 unter anderem aus einem Lenkgetriebemodul 10 und einem Lenkradmodul 20 aufgebaut, die jeweils über einen Elektromotor 11, 21 und ein Steuergerät 12, 22 verfügen und über einen Kommunikationsbus 30 verbunden sind, gegebenenfalls unter Zwischenschaltung einer übergeordneten Steuereinheit 40.

Die Lenkfähigkeit und Agilität des Fahrzeugs 100 werden über die Performance des Lenkgetriebemoduls 10 bestimmt, die Haptik für den Fahrer wird über das Lenkradmodul 20 vorgegeben.

Um die Haptik und Performance konventioneller, also mechanisch verbundener Lenksysteme nachzuahmen oder sogar zu verbessern, wird erfindungsgemäß unter anderem insbesondere ein intelligentes Sensor- und Regelungskonzept auf den beiden Komponenten und der Datenübertragung zwischen ihnen zur Anwendung vorgeschlagen.

Bekannt sind Steer-by-Wire-Lenksysteme 1, welche ausgebildet sind zur Erfassung des Lenkwinkels 114 im Lenkradmodul 20 und zum Beispiel zur Ansteuerung eines Zahnstangenmoduls eines Lenkgetriebes 15 auf einen Solllenkwinkel 108.

Problematisch ist dabei die nur bedingte Einstellfähigkeit der Haptik, wobei eine Abbildung einer lenksäulenbasierten Haptik mit mechanischer Übertragungsstrecke zwischen Lenkrad 24 und Lenkgetriebe 15 eines Lenkgetriebemoduls 10 nicht möglich ist.

Die Erfindung betrifft unter anderem ein Steer-by-Wire-Lenksystem 1 und insbesondere ein für ein derartiges System zu Grunde liegendes Sensor- und Regelungskonzept, zum Beispiel im Zusammenhang mit einem Betriebsverfahren für ein Steer-by-Wire-Lenksystem 1 mit Fokus auf der Kommunikation zwischen Lenkradmodul 20 und Lenkgetriebemodul 10. Beide Module 10 und 20 sind mit Winkelsensoren 13 bzw. 23 ausgestattet. Diese können zum Beispiel absolut messende Multiturnzähler am jeweiligen Elektromotor 11, 21 sein oder auch spezielle Sensoren, welche die Lenkradumdrehung und die Zahnstangenposition erfassen.

Vorzugsweise werden die Sensoren 13, 23 an der Welle der jeweiligen Elektromotoren 11, 21 eingesetzt, da diese ebenfalls zur Rotorlageerfassung und Ansteuerung benutzt werden können.

Das erfindungsgemäß vorgeschlagene Regelungskonzept sieht zum Beispiel eine zweistufige Regelung vor:
Zunächst wird eine Istposition 107 des Lenkgetriebemoduls 10 erfasst und über den Kommunikationsbus 30 an das Lenkradmodul 20 übermittelt.

Das Lenkradmodul 20 regelt die Position des Lenkradmoduls 20 nach einer bestimmten und insbesondere vorgegebenen Zuordnungsvorschrift auf eine zu übertragene Istposition 107 des Lenkgetriebemoduls 10 aus.

Die Zuordnungsvorschrift ergibt sich durch die gewünschte und insbesondere parametrisierbare feste oder variable Lenkübersetzung und gegebenenfalls aus weiteren Größen, z.B. aus der Fahrzeuggeschwindigkeit 103, einer Fahrbahnauswahl, einem Gelände- oder Fahrbahnzustand und gegebenenfalls weiteren Größen und Parametern, die einzeln oder insgesamt in einem Parametersatz 104 beschrieben werden können.

Im Rahmen der Positionsregelung durch das Lenkradmodul 20 wird ein vom Fahrer 101 aufgebrachtes Lenkmoment im Sinne eines Handmoments oder einer Handkraft 105 erfasst und ein Fahrerhandmoment 106 berechnet und anschließend an das Lenkgetriebemodul 10 übertragen.

Mit dem berechneten Fahrerhandmoment 106 und gegebenenfalls zusätzlichen Größen, z.B. einer Fahrzeuggeschwindigkeit 103, einer Fahrprofilauswahl, einem Gelände- und/oder Fahrbahnzustand gemäß dem Parametersatz 104, werden eine Sollkraft oder ein Sollmoment 111 berechnet, die so bemessen und gerichtet sind, dass sie das Handmoment 105 ausregeln und insbesondere zu null werden lassen.

Dieser Regelkreislauf mit seinem Regelverfahren 200 ist in Figur 2 dargestellt.

Für die Berechnung des Fahrerhandmoments 106 wird die Winkelabweichung 109 im Lenkradmodul 20 ausgewertet, die sich zwischen Solllenkwinkel 108, der sich aus der Istposition 107 des Lenkgetriebemoduls 10 berechnet, und Istlenkwinkel 114 des Lenkradmoduls 20 ergibt.

Die Regelung im Lenkradmodul 20 wird vorteihafterweise so ausgelegt, dass sie in einem kleinen Lenkwinkelbereich um den auszuregelnden Winkel herum nur ein begrenztes Regelmoment aufbringt, welches typischerweise proportional zur Winkelabweichung 109 ansteigt.

Der Fahrer 101 würde mit seinem Handmoment 105 dem ausregelnden Moment des Lenkradmoduls 20 entgegenwirken, dies würde bei entsprechender Höhe zu einer Winkelabweichung 109 führen.

Diese Winkelabweichung 109 kann über die Auslegung der Regelung, nämlich durch Bestimmung oder Festlegung, welches Motormoment 110 bei welcher Abweichung 109 aufgebracht wird, in ein Handmoment 106 umgerechnet werden.

Zusätzlich können weitere Größen, wie eine aktuelle Beschleunigung und eine Geschwindigkeit des Lenkradmoduls 20, erfasst werden, um Momente durch Trägheiten, Latenzzeiten und Hysteresen abziehen zu können.

Figur 3 illustriert eine Regelung im Lenkradmodul 20 mit einem entsprechenden Regelverfahren 300.

Die Regelung innerhalb des Lenkgetriebemoduls 10 ist nicht im Detail dargestellt und kann diesbezüglich im Wesentlichen bekannten Lenksystemen entsprechen.

Für die Übertragung der Signale - also insbesondere der ersten und zweiten Steuersignale - im Kommunikationsbus 30 kann in vorteilhafter Weise gefordert werden, dass sie geschützt, also verfälschungssicher und redundant übertragen werden, um die Ausfallsicherheit zu gewährleisten.

Typischerweise können die Regelung sowie die Übertragung der Regelgrößen auf dem Kommunikationsbus 30 mit einer Zykluszeit von 1 ms oder darunter realisiert werden, um den haptischen Anforderungen gerecht zu werden.

Folgende Aspekte sind bei Ausführungsformen der vorliegenden Erfindung von Bedeutung:
- In der Anwendung kann erfindungsgemäß ein Sensorkonzept eingesetzt werden, welches nur auf integrierten Rotorlagesensoren basiert und ohne weitere Sensorik auskommt.
- Ferner kann erfindungsgemäß ein Regelungskonzept realisiert werden, welches sowohl die Performance wie auch die Haptik eines konventionellen Lenkgetriebes im Steer-by-Wire-Lenksystem 1 garantiert oder sogar verbessert.
- Darüber hinaus kann alternativ oder zusätzlich ein Datenaustausch zwischen Lenkradmodul 20 und Lenkgetriebemodul 30 realisiert werden, welcher auf dem Fahrerhandmoment 105 als Lenkmoment sowie auf einer Istposition 107 zum Beispiel von Zahnstangen basiert.
- Ferner kann eine frei parametrierbare Haptik realisiert werden, und zwar durch Auslegung der Regelung im Lenkradmodul 20, insbesondere über den Zusammenhang zwischen Regelmoment und Winkelabweichung 109.

Anstatt der Auslegung der Regelung auf einen bestimmten Zusammenhang zwischen Winkelabweichung 109 und Motormoment 110, aus denen man ein Fahrerhandmoment 106 berechnen kann, ist es ebenfalls möglich, einen Drehmomentsensor einzusetzen, der das Fahrerhandmoment direkt erfasst oder misst. Dieses Fahrerhandmoment 106 kann dann in die Regelschleife zum Lenkgetriebemodul 10 eingespeist werden.

Bei dieser Ausführungsform ergibt sich als Vorteil ein weniger aufwendiger Regelalgorithmus, der genauer arbeiten könnte, weil er immer ohne Winkeldifferenz ausregelt. Nachteilig ist bei dieser Ausgestaltungsform die Notwendigkeit einer zusätzlichen Sensorik, die sowohl zusätzliche Kosten als auch einen zusätzlichen Platzbedarf verursacht und nicht über Parameter einstellbar ist.

Erfindungsgemäß stellen sich unter anderem folgende Vorteile ein:
Die Notwendigkeit eines Drehmomentsensors entfällt.

Es wird eine einstellbare Haptik, beispielsweise über ein maximales Handmoment, realisierbar.

Es ergibt sich ein Handmomentenanstieg über eine Winkelabweichung 109.

Durch die erfindungsgemäße Regelung auf ein Fahrerhandmoment 106 - und nicht wie herkömmlicherweise auf einen Lenkwinkel - kann ein Fahrerwunsch genauer oder sogar exakt abgebildet werden.

Die Performance und die Haptik eines konventionellen Lenksystems können nachgeahmt und verbessert werden.

Aus den einzelnen Regelkreisen und der gesamten Regelschleife ist ein Regelkonzept inklusive der zu übertragenden Größen bei einem Steer-by-Wire-Lenksystem 1 definiert.

Die Haptik für den Fahrer 101 ist über Parameter frei einstellbar und steuerbar.

Im Gegensatz zu bekannten Steer-by-Wire-Regelalgorithmen, wird beim erfindungsgemäßen Vorgehen nicht versucht, real herrschende Kräfte nachzurechnen oder zu modellieren, um sie dem Fahrer künstlich aufzuschalten. Vielmehr können erfindungsgemäß die realen Kräfte direkt, so wie sie auftreten, in Form von Positionsveränderungen übermittelt werden.

### Bezugszeichenliste

- 1: Steer-by-Wire-Lenksystem, Lenksystem

- 10: Lenkgetriebemodul
- 11: elektrischer Antrieb, Elektromotor
- 12: Steuereinheit
- 13: Sensoreinheit
- 15: Lenkgetriebe
- 16: Lenkelement
- 20: Lenkradmodul
- 21: elektrischer Antrieb, Elektromotor
- 22: Steuereinheit
- 23: Sensoreinheit
- 24: Lenkrad
- 25: Lenkradwelle
- 30: Bus, Kommunikationskanal
- 31: Steuerzweig
- 32: Knoten
- 40: (übergeordnete) Steuereinheit

- 100: Fahrzeug
- 101: Fahrer, Benutzer
- 102: Fahrbahn
- 103: Geschwindigkeit
- 104: Fahrbahnwechselwirkung, Anregung, Gegenkraft, Fahrbahnzustand, Charisma
- 105: Handmoment, Handkraft
- 106: berechnetes Fahrerhandmoment im Lenkradmodul 20
- 107: Istposition im Lenkgetriebemodul 10
- 108: Solllenkwinkel
- 109: Winkelabweichung
- 110: Motormoment aus Positionsregelung
- 111: Sollmoment
- 112: Rotorlageänderung
- 113: Rotorlage
- 114: Istlenkwinkel

- 200: Regelverfahren zur Gesamtregelung des Steer-by-Wire-Lenksystems 1

- 300: Regelverfahren zur Regelung des Lenkradmoduls 10
- 301: Einheit zur soll Winkelbestimmung
- 302: Einheit zur Bestimmung einer Regelabweichung
- 303: Einheit zur Regelung des Motormoments
- 304: Einheit zur Kompensation der Massenträgheit
- 305: Einheit zur Berechnung des Lenkwinkels
- 306: Einheit zur Berechnung des Handmoments

## Patentansprüche

1. Betriebsverfahren für ein Steer-by-Wire-Lenksystem (1) mit einem Lenkgetriebemodul (10), einem Lenkradmodul (20) und einem diese verbindenden Kommunikationskanal (30),
bei welchem:
- eine Istposition am oder im Lenkgetriebemodul (10) erfasst wird und
- eine Sollposition im Lenkradmodul (20) in Relation zur Istposition am oder im Lenkgetriebemodul (10) unter Verwendung einer Zuordnungsvorschrift ausgeregelt wird,
wobei:
- durch Einstellen der Zuordnungsvorschrift eine erweiterte haptische Rückmeldung an den Benutzer realisiert wird,
- auf eine Positionsabweichung im Lenkradmodul (20) und/oder auf einen Messwert eines Drehmomentensensors ein Lenkmoment und/oder eine Lenkkraft ermittelt werden, welche auf ein Lenkrad (24) des Lenkradmoduls (20) wirken, und
- mittels der invertierten Zuordnungsvorschrift aus dem ermittelten Lenkmoment und/oder der ermittelten Lenkkraft ein zweites Steuersignal für das Lenkgetriebemodul (10) bestimmt und über einen Bus (30) an das Lenkgetriebemodul (10) übertragen wird,
- nämlich zu dessen Positionierung, zur Ansteuerung eines im Lenkgetriebemodul (10) vorgesehenen Antriebs (13) und/oder gemäß dem ermittelten Lenkmoment bzw. gemäß der ermittelten Lenkkraft.

2. Betriebsverfahren nach Anspruch 1,
- bei welchem die Istposition im Lenkgetriebemodul (10) und/oder ein dafür repräsentatives Signal als erstes Steuersignal über den Kommunikationskanal (30) an das Lenkradmodul (20) übertragen wird,
- nämlich zu dessen Positionierung, zur Modellierung einer Haptik und/oder zur Ansteuerung eines im Lenkradmodul (20) vorgesehenen Antriebs (23).

3. Betriebsverfahren nach Anspruch 1, bei welchem das Lenkmoment bzw. die Lenkkraft repräsentativ ist für ein Fahrerhandmoment bzw. für eine Fahrerhandkraft, welche im Betrieb von einem Bediener auf ein Lenkrad (24) des Lenkradmoduls (20) ausgeübt werden.

4. Betriebsverfahren nach einem der vorangehenden Ansprüche, bei welchem die Zuordnungsvorschrift und/oder eine invertierte Zuordnungsvorschrift repräsentativ sind für eine steuerbare Lenkübersetzung zwischen dem Lenkgetriebemodul (10) und dem Lenkradmodul (20).

5. Steuereinheit (12, 22, 40) für ein Steer-by-Wire-Lenksystem (1),
- wobei das Steer-by-Wire-Lenksystem (1) mit einem Lenkgetriebemodul (10), einem Lenkradmodul (20) und einem diese verbindenden Kommunikationskanal (30) ausgebildet ist und
- wobei die Steuereinheit (12, 20, 40) eingerichtet ist, ein Betriebsverfahren nach einem der Ansprüche 1 bis 4 auszuführen.

6. Steer-by-Wire-Lenksystem (1),
- welches mit einem Lenkgetriebemodul (10), einem Lenkradmodul (20) und einem diese verbindenden Kommunikationskanal ausgebildet ist und
- welches eine Steuereinheit (12, 20, 40) nach Anspruch 5 aufweist.

7. Fahrzeug (100), welches
- zur Fortbewegung mindestens ein lenkbares Rad und
- zur Lenkung des mindestens einen lenkbaren Rades ein Steer-by-Wire-Lenksystem (1) nach Anspruch 6
aufweist.

## Claims

1. Operating method for a steer-by-wire steering system (1) comprising a steering gear module (10), a steering wheel module (20) and a communication channel (30) which connects said modules,
in which:
- an actual position on or in the steering gear module (10) is detected, and
- a target position in the steering wheel module (20) is adjusted in relation to the actual position on or in the steering gear module (10) using an assignment rule,
wherein:
- augmented haptic feedback is provided to the user by setting the assignment rule,
- a steering torque and/or a steering force acting on a steering wheel (24) of the steering wheel module (20) are determined in response to a position deviation in the steering wheel module (20) and/or in response to a measured value from a torque sensor, and
- a second control signal for the steering gear module (10) is ascertained by means of the inverse assignment rule from the determined steering torque and/or the determined steering force and transmitted to the steering gear module (10) via a bus (30),
- namely for positioning said steering gear module, for actuating a drive (13) provided in the steering gear module (10), and/or according to the determined steering torque and/or according to the determined steering force.

2. Operating method according to claim 1,
- wherein the actual position in the steering gear module (10) and/or a signal representative thereof is transmitted to the steering wheel module (20) as a first control signal via the communication channel (30),
- namely for positioning said steering wheel module, for modeling haptics and/or for actuating a drive (23) provided in the steering wheel module (20).

3. Operating method according to claim 1, wherein the steering torque or the steering force is representative of a torque from a driver's hand or a force from a driver's hand applied by an operator, during operation, to a steering wheel (24) of the steering wheel module (20).

4. Operating method according to any of the preceding claims, wherein the assignment rule and/or an inverse assignment rule are representative of a controllable steering ratio between the steering gear module (10) and the steering wheel module (20).

5. Control unit (12, 22, 40) for a steer-by-wire steering system (1),
- wherein the steer-by-wire steering system (1) is designed having a steering gear module (10), a steering wheel module (20) and a communication channel (30) which connects said modules, and
- wherein the control unit (12, 20, 40) is designed to carry out an operating method according to any of claims 1 to 4.

6. Steer-by-wire steering system (1),
- which is designed having a steering gear module (10), a steering wheel module (20) and a communication channel which connects said modules, and
- which comprises a control unit (12, 20, 40) according to claim 5.

7. Vehicle (100), which comprises
- at least one steerable wheel for progressive movement, and
- a steer-by-wire steering system (1) according to claim 6 for steering the at least one steerable wheel.

## Revendications

1. Procédé de fonctionnement pour un système de direction à commande par câble électrique (1) comportant un module de mécanisme de direction (10), un module de volant (20) et un canal de communication (30) reliant ces derniers,
selon lequel :
- une position réelle au niveau du ou dans le module de mécanisme de direction (10) est détectée et
- une position théorique dans le module de volant (20) est réglée par rapport à la position réelle au niveau du ou dans le module de mécanisme de direction (10) à l'aide d'une règle d'affectation,
dans lequel :
- par réglage de la règle d'affectation, une rétroaction haptique élargie est réalisée pour l'utilisateur,
- sur un écart de position dans le module de volant (20) et/ou sur une valeur de mesure d'un capteur de couple, un couple de direction et/ou une force de direction qui agissent sur un volant (24) du module de volant (20), et
- au moyen de la règle d'affectation inversée sur le couple de direction déterminé et/ou la force de direction déterminée, un second signal de commande pour le module de mécanisme de transmission (10) est spécifié et transmis au module de mécanisme de direction (10) par l'intermédiaire d'un bus (30),
- notamment pour son positionnement, pour la commande d'un entraînement (13) prévu dans le module de mécanisme de direction (10) et/ou selon le couple de direction déterminé respectivement selon la force de direction déterminée.

2. Procédé de fonctionnement selon la revendication 1,
- selon lequel la position réelle dans le module de mécanisme de direction (10) et/ou un signal représentant celle-ci sont transmis en tant que premier signal de commande par le biais du canal de communication (30) au module de volant (20),
- notamment pour son positionnement, pour la modélisation d'une sensation tactile et/ou pour la commande d'un entraînement (23) prévu dans le module de volant (20).

3. Procédé de fonctionnement selon la revendication 1, selon lequel le couple de direction respectivement la force de direction représentent un couple manuel du conducteur respectivement une force manuelle du conducteur, qui sont exercés en fonctionnement par un opérateur sur un volant (24) du module de volant (20).

4. Procédé de fonctionnement selon l'une quelconque des revendications précédentes, selon lequel la règle d'affectation et/ou une règle d'affectation inversée représentent un rapport de direction pouvant être commandé entre le module de mécanisme de direction (10) et le module de volant (20).

5. Unité de commande (12, 22, 40) pour un système de direction à commande par câble électrique (1),
- dans lequel le système de direction à commande par câble électrique (1) est conçu avec un module de mécanisme de direction (10), un module de volant (20) et un canal de communication (30) reliant ces derniers et
- dans lequel l'unité de commande (12, 20, 40) est conçue pour exécuter un procédé de fonctionnement selon l'une des revendications 1 à 4.

6. Système de direction à commande par câble électrique (1),
- qui est conçu avec un module de mécanisme de direction (10), un module de volant (20) et un canal de communication reliant ces derniers et
- qui présente une unité de commande (12, 20, 40) selon la revendication 5.

7. Véhicule (100), lequel présente
- pour le déplacement d'au moins une roue directrice et
- pour la direction de l'au moins une roue directrice, un système de direction à commande par câble électrique (1) selon la revendication 6
